Europäisches Patentamt

European Patent Office

Office européen des brevets

(19)

(11) Veröffentlichungsnummer : **0 205 825**
**B1**

(12) # EUROPÄISCHE PATENTSCHRIFT

(45) Veröffentlichungstag der Patentschrift :
19.07.89

(51) Int. Cl.⁴ : **G 01 N 23/04**

(21) Anmeldenummer : 86105769.3

(22) Anmeldetag : 25.04.86

(54) **Verfahren und Vorrichtung zur zerstörungsfreien Durchstrahlungsprüfung.**

(30) Priorität : 08.06.85 DE 3520600

(43) Veröffentlichungstag der Anmeldung :
30.12.86 Patentblatt 86/52

(45) Bekanntmachung des Hinweises auf die Patenterteilung : 19.07.89 Patentblatt 89/29

(84) Benannte Vertragsstaaten :
FR GB

(56) Entgegenhaltungen :
EP--A-- 0 098 398
BE--A--   763 632
DE--A-- 2 705 635
US--A-- 3 992 627

(73) Patentinhaber : Sauerwein, Kurt, Dr.
Bergische Strasse 16
D-5657 Haan 1 (DE)

(72) Erfinder : Simon, Wolfgang
Asternstrasse 32
D-5600 Wuppertal 1 (DE)
Erfinder : Link, Rainer, Dr.
Buchenhöhe 1
D-5014 Kerpen-Horrem (DE)
Erfinder : Nuding, Wolfgang, Dr.
Am Gerstenkamp 8
D-5210 Troisdorf (DE)
Erfinder : Sauerwein, Kurt, Dr.
Kattendahl 7
D-4006 Erkrath (DE)

(74) Vertreter : König, Reimar, Dr.-Ing. et al
Patentanwälte Dr.-Ing. Reimar König Dipl.-Ing. Klaus
Bergen Wilhelm-Tell-Strasse 14 Postfach 260162
D-4000 Düsseldorf 1 (DE)

## Beschreibung

Die Erfindung betrifft ein Verfahren und eine Vorrichtung zur zerstörungsfreien Durchstrahlungsprüfung, bei dem die Strahlen einer Röntgen- oder Gammastrahlenquelle ein zwischen der Strahlquelle und einem Leuchtschirm angeordnetes Werkstück durchdringen und auf einem Leuchtschirm ein Strahlenbild erzeugen, das mittels einer Fernsehkettenübertragung auf einem Fernsehmonitor abgebildet wird. Ein derartiges Verfahren bzw. eine derartige Vorrichtung ist z. B. aus EP-A-0 098 398 bekannt.

Bei der zerstörungsfreien Durchstrahlungsprüfung von Werkstücken kommen sehr häufig nebeneinanderliegende, sehr große Materialdickenunterschiede vor, z. B. bei Motorblöcken, Schweißnähten oder geometrisch komplexen Bauteilen. Da in diesen oft dicht nebeneinanderliegenden unterschiedlichen Wanddicken auch sehr kleine Fehler sichtbar gemacht werden müssen, ist der für das bildgebende System erforderliche Kontrastumfang sehr hoch. Wegen der häufig starken Materialdickenunterschiede innerhalb eines Bildes kommt es an den Stellen geringer Wanddicke oder bei fehlendem Material zu so starken Überstrahlungen, daß es einmal zu einer Beschädigung der Fernsehaufnahmeröhre kommen kann, und daß zum anderen der technisch mögliche Kontrastumfang nicht ausreicht, um auch kleine Unterschiede, die auf kleine Fehler hindeuten, sichtbar zu machen.

Um diese Schwierigkeiten zu vermeiden, ist es bekannt, für jedes zu untersuchende Werkstück und für jede Durchstrahlungsrichtung mechanische Masken aus Blei anzufertigen, die jedoch aufgrund ihrer komplexen Struktur sehr aufwendig in der Herstellung und damit sehr teuer sind. Ohne die Verwendung solcher mechanischen Masken aus Blei war es bisher nicht möglich, eine ausreichende Bildqualität und damit Fehlererkennbarkeit zu erreichen, so daß bildgebende Systeme in der zerstörungsfreien Durchstrahlungsprüfung von Werkstücken nicht eingesetzt werden konnten.

Der Erfindung liegt die Aufgabe zugrunde, ein Verfahren und eine Vorrichtung zu schaffen, mit Hilfe derer es auf schnelle und einfache Weise möglich ist, die unterschiedlichsten Werkstücke mit erheblichen Wanddickenunterschieden zu durchstrahlen und das erzeugte Bild ohne Gefahr für die Fernsehkamera und mit ausreichendem Kontrast, um auch kleine Fehler erkennen zu können, auf einem Fernsehmonitor sichtbar zu machen.

Gelöst wird diese Aufgabe dadurch, daß bei einem Verfahren der eingangs erwähnten Art erfindungsgemäß zunächst ein lichtempfindliches Negativ durch das Strahlbild auf dem Leuchtschirm belichtet, entwickelt und anschließend an derselben Stelle im Strahlengang des Strahlenbildes auf dem Leuchtschirm als Maske zum Abdunkeln der zu hellen Bildbereiche angeordnet wird. Durch die erfindungsgemäße fotografische Maske wird die Fernsehkamera vor Überstrahlung geschützt und damit eine Beschädigung der Aufnahmeröhre verhindert. Durch das Abdunkeln der zu hellen Bildbereiche mit Hilfe der Maske werden auch kleine Kontrastunterschiede auf dem Bild sichtbar gemacht, so daß auch kleine Fehler erkennbar sind.

Vorzugsweise wird die Belichtungszeit des Negativs entsprechend dem Kontrast zwischen zu hellen und dunklen Bildbereichen eingestellt, so daß nur die zu hellen Bildbereiche durch die Maske abgedunkelt werden.

Für eine serienmäßige Werkstückprüfung wird eine Maske von einem Gutteil angefertigt und bei der Fertigungskontrolle der Serienteile verwendet. Auf diese Weise werden bei der Fertigungskontrolle der Serienteile Fehler sichtbar gemacht, die im Gutteil nicht vorhanden sind.

Eine Vorrichtung zur Durchführung des erfindungsgemäßen Verfahrens besteht aus einer Strahlenquelle für Röntgen- oder Gammastrahlen, einem Leuchtschirm und einer Fernsehkettenübertragung des Strahlenbildes auf den Leuchtschirm eines Fernsehmonitors und ist erfindungsgemäß dadurch gekennzeichnet, daß eine Maske mit einem fotografischen Negativbild des Strahlenbildes des Werkstücks zwischen dem Leuchtschirm und der Fernsehkamera angeordnet ist.

Die Erfindung wird nachstehend anhand eines in der Zeichnung dargestellten Ausführungsbeispiels des näheren erläutert. In der Zeichnung zeigen :

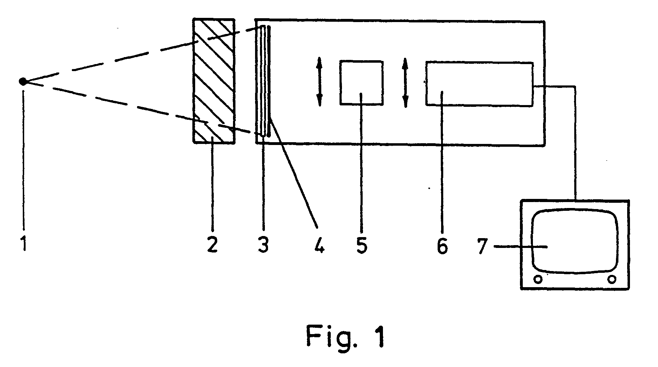

Fig. 1 eine schematische Darstellung einer Vorrichtung zur zerstörungsfreien Durchstrahlungsprüfung von Werkstücken,

Fig. 2 ein Strahlenbild eines durchstrahlten Werkstücks ohne Verwendung einer erfindungsgemäßen Maske,

Fig. 3 ein Strahlenbild desselben durchstrahlten Werkstücks unter Verwendung einer erfindungsgemäßen Maske und

Fig. 4 ein Strahlenbild eines durchstrahlten Werkstücks, das teilweise durch eine Maske abgedeckt ist.

Ein zu untersuchendes Werkstück 2 ist im Strahlengang einer Strahlenquelle 1 für Röntgen- oder Gammastrahlen angeordnet. Ein Leuchtschirm 3 erzeugt aus den unsichtbaren, das Werkstück 2 durchdringenden Röntgen- oder Gammastrahlen ein sichtbares Bild, das in einem Lichtverstärker 5 so aufbereitet wird, daß es mit Hilfe einer Fernsehkamera 6 aufgenommen und einem Fernsehmonitor 7 zur Darstellung des durchstrahlten Werkstückes 2 zugeleitet werden kann.

Zwischen dem Leuchtschirm 3 und dem Lichtverstärker 5 ist eine Maske 4 angeordnet, die aus einer Folie mit einem fotografischen Negativbild des Strahlenbildes des Werkstücks besteht. Dieses fotografische Negativbild ist stets da besonders dunkel geschwärzt, wo der Lichtschirm besonders hell ist, d. h. wo entweder gar kein oder nur sehr wenig Material des Werkstücks vorhanden ist. Auf diese Weise werden die zu hellen, überstrahlten Bereiche des Strahlenbildes auf dem Leuchtschirm 3 abgedunkelt und die geringen Kontraste in den übrigen Bereichen des Strahlenbildes sichtbar. Es ist so möglich, auch kleine durch geringe Kontrastunterschiede auf dem Leuchtschirm gekennzeichnete Fehler sichtbar zu machen.

Die Maske 4 läßt sich auf sehr einfache Weise herstellen, indem ein lichtempfindliches Negativ zunächst durch das Strahlenbild des Werkstücks auf dem Leuchtschirm belichtet und danach entwickelt wird. Das Negativ wird so lange belichtet, bis die störenden, zu hellen Bildbereiche ausreichend belichtet sind, so daß nach dem Entwickeln des Negativs die zu hellen Bereiche des Bildes entsprechend stark geschwärzt sind. Wird das entwickelte Negativ dann als Maske 4 an der gleichen Stelle wie bei der Belichtung in dem Strahlengang zwischen dem Strahlenbild auf dem Leuchtschirm 3 und der Fernsehkamera 6 angeordnet, so werden die zu hellen Bildbereiche durch die Maske 4 abgedunkelt.

Besonders vorteilhaft kann die Maske bei der serienmäßigen Werkstückprüfung eingesetzt werden, wenn sie von einem Gutteil angefertigt wird und danach bei der Fertigungskontrolle der Serienteile verwendet wird. Auf diese Weise werden die im Gutteil nicht vorhandenen Defekte bei der Durchstrahlungsprüfung der Serienteile mit ausreichendem Kontrast dargestellt.

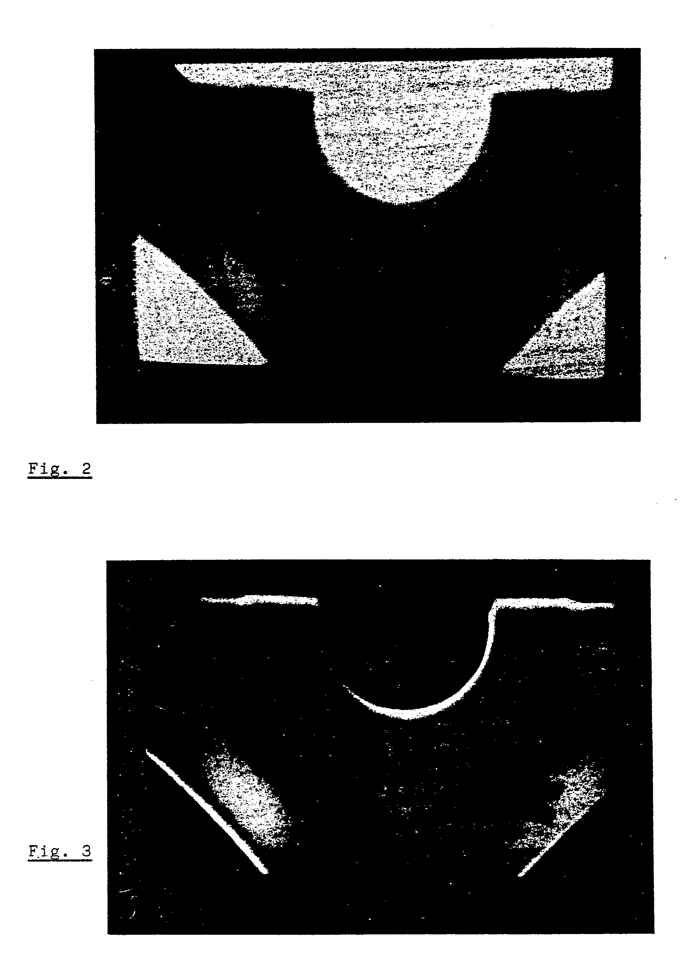

Fig. 2 zeigt die Durchstrahlungsaufnahme eines Lagerblocks ohne erfindungsgemäße Maske. Deutlich sind am Rand und unten die aufgrund fehlenden Materials überstrahlten Bereiche zu sehen.

In Fig. 3 ist eine erfindungsgemäße Negativfilmmaske zwischen dem Strahlenbild auf dem Leuchtschirm und der Fernsehkamera angeordnet. Es sind nun keine überstrahlten Bereiche mehr vorhanden.

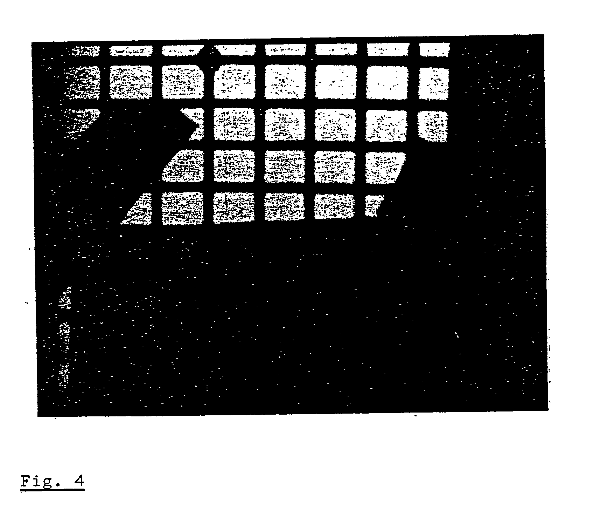

In Fig. 4 ist die Durchstrahlungsaufnahme einer Gitterstruktur zu sehen. Der obere Bereich ist ohne Negativfilmmaske, der untere, dunklere Bereich mit zwischen dem Strahlenbild auf dem Leuchtschirm und der Fernsehkamera angeordnetem Negativfilmmaske aufgenommen. Es ist deutlich erkennbar, daß durch Überstrahlung der Kontrastumfang des Bildbereichs verringert wird, in dem keine Negativfilmmaske angeordnet ist. Im unteren Teil des Bildes mit Negativfilmmaske erkennt man deutlich die Materialverdickung im Kreuzungsbereich der Gitterstruktur. Weiterhin ist gut erkennbar, daß die Überstrahlung auch in den nicht überstrahlten Bereich hineinläuft. Ohne Negativfilmmaske werden die Drahtstege nicht zu voller Breite abgebildet.

## Patentansprüche

1. Verfahren zur zerstörungsfreien Durchstrahlungsprüfung, bei dem die Strahlen einer Röntgen- oder Gammastrahlenquelle eine zwischen der Strahlungsquelle und einem Leuchtschirm angeordnetes Werkstück durchdringen und auf dem Leuchtschirm ein Strahlenbild erzeugen, das mittels einer Fernsehkettenübertragung auf einem Fernsehmonitor abgebildet wird, dadurch gekennzeichnet, daß zunächst ein lichtempfindliches Negativ durch das Strahlenbild auf dem Leuchtschirm belichtet sowie alsdann entwickelt und anschließend an derselben Stelle im Strahlengang des Strahlenbildes auf dem Leuchtschirm als Maske zum Abdunkeln der zu hellen Bildbereiche angeordnet wird.

2. Verfahren nach Anspruch 1, dadurch gekennzeichnet, daß die Belichtungszeit des Negativs entsprechend dem Kontrast zwischen zu hellen und dunkleren Bildbereichen eingestellt wird.

3. Verfahren nach Anspruch 1 oder 2, dadurch gekennzeichnet, daß zur serienmäßigen Werkstückprüfung eine Maske von einem Gutteil angefertigt und bei der Fertigungskontrolle der Serienteile verwendet wird.

4. Vorrichtung zur Durchführung des Verfahrens nach den Ansprüchen 1 bis 3 mit einer Strahlenquelle für Röntgen- oder Gammastrahlen, einem Leuchtschirm, und einer Fernsehkettenübertragung des Strahlenbildes auf dem Leuchtschirm eines Fernsehmonitors, dadurch gekennzeichnet, daß eine Maske (4) mit einem fotografischen Negativbild des Strahlenbildes des Werkstücks (2) zwischen dem Leuchtschirm (3) und der Fernsehkamera (6) angeordnet ist.

## Claims

1. A method for non-destructive radiation testing in which radiation from an X-ray or gamma-ray source passes through a workpiece located between the radiation source and a luminescent screen to produce a radiation image on the luminescent screen that is displayed on a television monitor by transmission by means of a closed circuit television system, characterised in that a light-sensitive negative is first exposed by the radiation image on the luminescent screen, and is then developed and subsequently arranged in the same position on the screen in the path of the radiation image to form a mask which darkens the areas of the image that are too bright.

2. A method according to claim 1, characterised in that the exposure time of the negative is set in dependence on the contrast between the too bright and the darker areas of the image.

3. A method according to claim 1 or claim 2, characterised in that for the series testing of workpieces a mask is made from a stock workpiece and is used in monitoring the manufacture of the series parts.

4. Apparatus for carrying out the process according to any one of claims 1 to 3, having a source of X-ray or gamma-ray radiation, a luminescent screen, and a closed circuit television system for transmitting the radiation image to the luminescent screen of a the radiation image to the luminescent screen of a television monitor, characterised in that a mask (4) with a negative photographic image of the radiation image of the workpiece (2) is located between the luminescent screen (3) and the television camera (6).

## Revendications

1. Procédé d'examen radiographique non destructif dans lequel les rayons provenant d'une source X ou γ traversent une pièce intercalée entre la source de rayons et un écran lumineux et donnent sur l'écran lumineux une image de rayons qui est reproduite, au moyen d'un dispositif de transmission de chaîne de télévision, sur un moniteur de télévision, caractérisé en ce que tout d'abord un négatif photosensible est exposé sur l'écran lumineux à l'action de l'image de rayons, puis développé et placé ensuite sur l'écran lumineux, au même endroit sur le trajet des rayons de l'image de rayons, pour constituer un masque pour l'obscurcissement des zones de l'image qui sont trop claires.

2. Procédé selon la revendication 1, caractérisé en ce que la durée d'exposition du négatif aux rayons est fonction du contraste entre les zones d'image trop claires et sombres.

3. Procédé selon l'une des revendications 1 ou 2, caractérisé en ce que, pour l'examen en série de pièces, un masque est réalisé à partir d'une pièce du matériau et utilisé pour le contrôle de la fabrication des pièces en série.

4. Dispositif pour l'application du procédé selon l'une des revendications 1 à 3, qui comporte une source de rayons X ou γ, un écran lumineux et un dispositif de transmission de chaîne de télévision envoyant l'image de rayons sur l'écran lumineux d'un moniteur de télévision, caractérisé en ce qu'un masque (4) comportant une image photographique négative de l'image de rayons de la pièce (2) est intercalé entre l'écran lumineux (3) et la caméra de télévision (6).

Fig. 1

Fig. 2

Fig. 3

Fig. 4

3